# FASCICULE DE BREVET EUROPEEN

(11) **EP 2 909 517 B1**
(45) Date de publication et mention de la délivrance du brevet: **17.05.2017**
(21) Numéro de dépôt: 13777059.0
(22) Date de dépôt: 16.10.2013
(51) Int. Cl.: F16L 59/02, F16L 1/20, F16L 9/00, F16L 53/00

(54) **PROCÉDÉ D'ASSEMBLAGE D'UNE CONDUITE RIGIDE DESTINÉE À ÊTRE PLACÉE DANS UNE ÉTENDUE D'EAU, INSTALLATION ET CONDUITE ASSOCIÉES**
VERFAHREN ZUR MONTAGE EINES STARREN ROHRS ZUR POSITIONIERUNG IN EINEM GEWÄSSER SOWIE ZUGEHÖRIGE ANLAGE UND ROHR
METHOD FOR ASSEMBLING A RIGID PIPE INTENDED TO BE PLACED IN A STRETCH OF WATER, AND ASSOCIATED INSTALLATION AND PIPE

(30) Priorité: 22.10.2012 FR 1260025
(43) Date de publication de la demande: 26.08.2015
(73) Titulaire: Technip France, 92400 Courbevoix (FR)
(72) Inventeur: ESPINASSE, Philippe, 76420 Bihorel (FR); GOORIS, François, 92210 Saint Cloud (FR); PATINET, Jean François, 24610 Villefranche de Lonchat (FR); VIALE, Sébastien, 78150 LE CHESNAY (FR); VAUDOISEY, Mathieu, 21190 Volnay (FR)
(74) Mandataire: Lavoix
(86) Numéro de dépôt international: PCT/EP2013/071586
(87) Numéro de publication internationale: WO 2014/063965

(56) Documents cités:
- EP-A1- 0 967 430
- DE-B3-102005 037 183
- US-A1- 2001 050 110
- US-A1- 2006 238 986

## Description

La présente invention concerne un procédé d'assemblage d'une conduite rigide, selon le préambule de la revendication 1.

Le document DE 10 2005 037 183 B3 décrit une conduite destinée à être placée dans un véhicule automobile. Cette conduite comprend un tube interne en plastique, un tube intermédiaire en matériau conducteur et une enveloppe externe. La conduite ne comprend pas de tube interne métallique et le tube interne n'est pas formé d'un assemblage bout-à-bout de tronçons. Le document EP 0 967 430 A1 décrit un procédé de fabrication d'une conduite comprenant un tube central métallique et une ligne fonctionnelle.

Un tel procédé d'assemblage est destiné à être mis en oeuvre pour la pose de conduites rigides dans une étendue d'eau maritime, fluviale ou lacustre, en vue du transport de fluide à travers l'étendue d'eau.

Par exemple, la conduite est destinée à convoyer un hydrocarbure au fond de l'étendue d'eau ou jusqu'à une installation de surface, en vue de son traitement et de son transport ultérieur vers un lieu d'utilisation.

Le procédé est avantageusement mis en oeuvre sur des installations de pose de conduites rigides en S ou en J.

De manière connue, les hydrocarbures recueillis au fond d'une étendue d'eau sont susceptibles de comporter des composés propres à se solidifier à basse température, tels que des hydrates. Il est donc nécessaire d'isoler thermiquement les conduites de transport d'hydrocarbures, notamment aux grandes profondeurs, afin de maintenir les hydrocarbures à une température supérieure à la température de solidification et éviter la formation de bouchons.

Pour ce faire, il est connu d'utiliser des conduites rigides de type « tube dans tube » (« Pipe in Pipe » ou « PIP »). Ces conduites comportent un tube interne métallique destiné à convoyer le fluide, un tube externe métallique destiné à être placé au contact de l'étendue d'eau et un espace annulaire intermédiaire entre les tubes, dans lequel est disposé un matériau contribuant à l'isolation.

Pour assurer le chauffage, les tubes sont isolés électriquement l'un de l'autre, et une source de puissance électrique est raccordée d'une part, au tube intérieur et d'autre part, au tube extérieur pour former une boucle de courant.

Un tel système de chauffage, décrit par exemple dans US 2005/054228, nécessite de disposer d'une source de puissance électrique élevée et d'une conduite de poids significatif.

Pour palier ce problème, il est connu également de placer une ligne électrique de chauffage dans l'annulaire entre les tubes. La ligne électrique est appliquée directement sur le tube interne, ce qui permet de réduire les pertes thermiques.

Cependant, le procédé d'assemblage d'une telle conduite rigide peut être fastidieux à mettre en oeuvre, puisqu'il nécessite d'introduire la ligne électrique de chauffage en même temps que le tube interne dans le tube externe. Le poids de la conduite reste par ailleurs significatif.

Un but de l'invention est donc d'obtenir un procédé d'assemblage d'une conduite rigide munie de moyens de chauffage efficaces, qui soit simple à mettre en oeuvre et qui permette la sélection de conduites de dimensions et de poids mieux appropriés.

À cet effet, l'invention a pour objet un procédé selon la revendication 1.

Le procédé selon l'invention peut comprendre l'une ou plusieurs des caractéristiques des revendications 2 à 10, prise(s) isolément ou suivant toute combinaison techniquement possible.

L'invention a également pour objet une installation d'assemblage d'une conduite rigide selon la revendication 11.

L'installation selon l'invention peut comprendre l'une ou plusieurs des caractéristiques de la revendication 12, prise(s) isolément ou suivant toute combinaison techniquement possible :

L'invention a aussi pour objet une conduite rigide selon la revendication 13.

La conduite selon l'invention peut comprendre l'une ou plusieurs des caractéristiques des revendications 14 et 15, prise(s) isolément ou suivant toute combinaison techniquement possible :

L'invention sera mieux comprise à la lecture de la description qui va suivre, donnée uniquement à titre d'exemple, et faite en se référant aux dessins annexés, sur lesquels :
- la figure 1 est une vue en perspective partiellement éclatée d'une première conduite rigide selon l'invention ;
- la figure 2 est une vue en coupe suivant un plan transversal de la conduite rigide de la figure 1 ;
- la figure 3 est une vue de côté schématique d'une première installation d'assemblage de la conduite de la figure 1, pour un procédé de pose en S ;
- la figure 4 est une vue partielle en perspective d'une partie de l'installation de la figure 3 ;
- la figure 5 est une vue en perspective d'un détail de l'installation de la figure 4, représentant un ensemble de découpe pour la formation de gorges longitudinales dans un manchon d'isolation thermique de la conduite rigide ;
- la figure 6 est une vue en perspective d'un ensemble de guidage d'au moins une ligne électrique destinée à être placée dans la gorge longitudinale du manchon de la conduite ;
- la figure 7 est une vue schématique partielle de l'ensemble de guidage et de la conduite lors de l'introduction de la ligne électrique dans une gorge ;
- la figure 8 est une vue d'un détail de l'ensemble de guidage de la figure 6 ;
- la figure 9 est une vue en perspective d'un ensemble d'injection d'un matériau fluide dans une gorge longitudinale ménagée dans un manchon de la conduite ;
- la figure 10 est une vue en perspective d'un ensemble de solidification du matériau fluide injecté dans la gorge ;
- la figure 11 est une vue de côté schématique d'une deuxième installation d'assemblage de la conduite de la figure 1, pour un procédé de pose en J ;

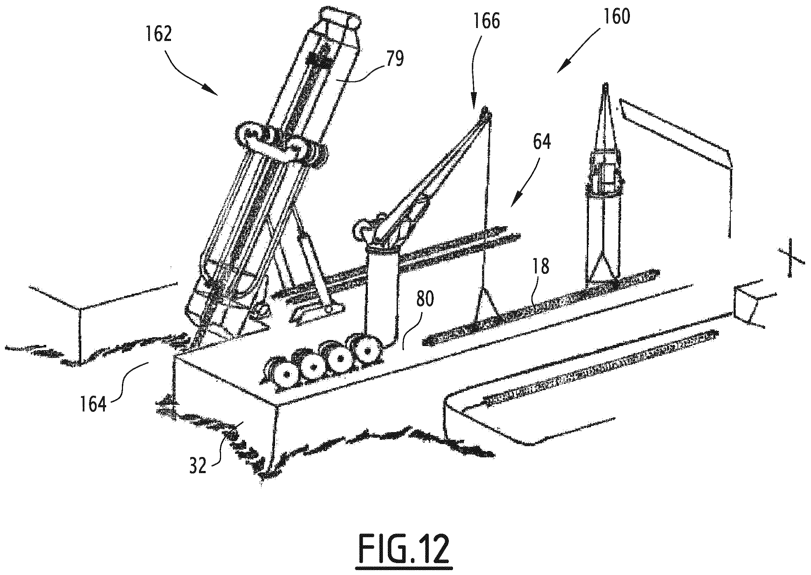

- la figure 12 est une vue partielle en perspective de l'installation de la figure 11.

Au sens de la présente invention, un élément est généralement « métallique » lorsque plus de 50% en masse de cet élément est formé de métal. Il est généralement « non métallique » lorsque 50% ou moins en masse de cet élément est formé de métal.

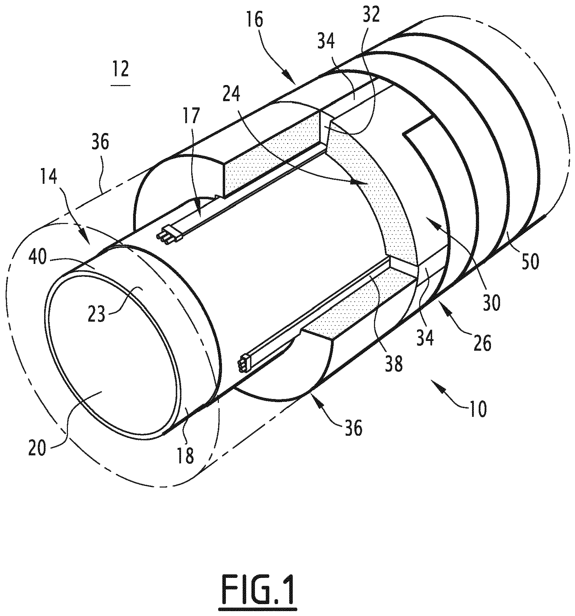

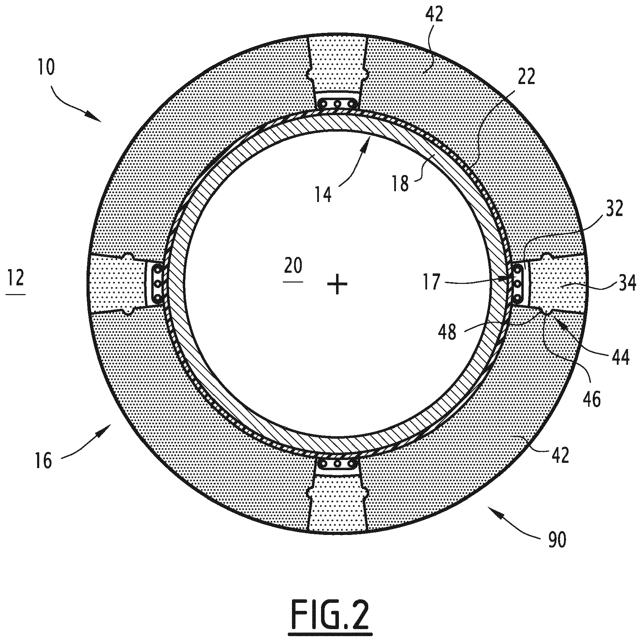

Une première conduite rigide 10 de transport de fluide fabriquée par un procédé d'assemblage selon l'invention est illustrée par les figures 1 et 2.

La conduite rigide 10 est destinée à être immergée dans une étendue d'eau 12, pour transporter un fluide à travers l'étendue d'eau 12.

La conduite rigide 10 est par exemple posée sur le fond de l'étendue d'eau 12 pour raccorder une installation de collecte de fluide, tel qu'un puits, à un ensemble de convoyage de fluide vers la surface. En variante, la conduite rigide 10 s'étend à travers l'étendue d'eau 12, depuis le fond de l'étendue d'eau 12 vers la surface.

L'étendue d'eau 12 est par exemple une mer, un océan, un lac ou un fleuve. La profondeur de l'étendue d'eau 12 est généralement supérieure à 10 m, et est par exemple comprise entre 100 m et 5000 m .

Le fluide prélevé et convoyé par la conduite rigide 10 est notamment un hydrocarbure, tel que du pétrole ou du gaz naturel.

Comme illustré par les figures 1 et 2, la conduite rigide 10 comporte un tube central métallique 14 et une enveloppe 16 d'isolation thermique non métallique disposée autour du tube central métallique 14. L'enveloppe d'isolation thermique 16 est destinée à entrer en contact avec l'étendue d'eau 12 dans laquelle est plongée la conduite 10.

La conduite rigide 10 comporte en outre au moins une ligne fonctionnelle 17, ici une ligne de chauffage, disposée à l'extérieur du tube central métallique 14 dans l'enveloppe d'isolation thermique 16.

Le tube central 14 comporte un assemblage bout-à-bout de tronçons de tube 18. Il délimite un passage central 20 continu de circulation du fluide à travers plusieurs tronçons de tube 18, entre les extrémités de la conduite 10.

Le tube central 14 présente par exemple un diamètre extérieur compris entre 10 cm et 130 cm. Le diamètre extérieur du passage central 20 est par exemple compris entre 8 cm et 127 cm

Chaque tronçon de tube 18 est réalisé à base de métal, par exemple en acier, en acier inoxydable et en autres aciers à teneur en Nickel variable ou combinaison de ces matériaux (exemple : tubes en acier revêtus intérieurement d'acier inoxydable).

Chaque tronçon de tube 18 présente une longueur comprise avantageusement entre 12 m et 96 m.

Le tronçon 18 est avantageusement muni extérieurement d'une couche de protection 22, telle qu'une couche d'epoxy lié par fusion.

Les extrémités de chaque paire de tronçons de tube 18 adjacents sont fixées entre elles au niveau d'une jonction 23 pour former un tube 14 continu. Cette fixation est effectuée par exemple par soudure.

L'enveloppe d'isolation thermique 16 comporte une couche interne continue 24, destinée à l'isolation thermique, et éventuellement, une couche externe de protection 26 entourant la couche interne 24.

Selon l'invention, la couche interne 24 comporte, pour chaque tronçon de tube 18, un manchon d'isolation thermique 30 délimitant au moins une gorge longitudinale 32 d'insertion d'une ligne de chauffage 17.

Dans cet exemple, la couche interne 24 comporte en outre, pour chaque gorge longitudinale 32, un bouchon 34 d'obturation extérieure de la gorge 32. La couche interne 24 comporte de plus, entre chaque paire de manchons 30 adjacents, un raccord 36 d'isolation thermique de la jonction 23 entre les tronçons de tube 18 adjacents.

Chaque manchon d'isolation thermique 30 est fixé sur la surface extérieure d'un tronçon de tube 18, sur la couche de protection 22, lorsque le tronçon 18 est muni d'une telle couche 22.

Le manchon 30 est par exemple formé à base d'un matériau isolant thermiquement, notamment à base d'une mousse d'un polymère, tel qu'un polyoléfine (PP, PE) ou un polyuréthane (PU).

La conductivité thermique du matériau isolant thermiquement est par exemple inférieure à 0.4 W/ (m.K)

L'épaisseur maximale du manchon 30 est de préférence supérieure à l'épaisseur du tronçon 18. Cette épaisseur est par exemple comprise entre 30 mm et 150 mm.

Le matériau isolant thermiquement formant le manchon 30 est apte à être imprégné par de l'eau lorsque la conduite 10 est immergée dans l'étendue d'eau 12.

Dans l'exemple représenté sur la figure 1, la longueur du manchon 30, prise le long de l'axe de la conduite 10, est inférieure à la longueur du tronçon de tube 18 sur lequel le manchon 30 est fixé.

Le manchon 30 délimite ainsi, sur le tronçon de tube 18, une partie centrale 38 couverte au moins partiellement par le manchon 30, et deux parties d'extrémité 40 faisant saillie au-delà du manchon 30 pour faciliter l'assemblage du tronçon de tube 18 avec un tronçon de tube 18 adjacent.

Chaque manchon 30 délimite au moins une gorge longitudinale 32. Avantageusement, chaque manchon 30 définit une pluralité de gorges longitudinales 32 réparties angulairement autour de l'axe de la conduite 10.

Le nombre de gorges longitudinales 32 est par exemple compris entre 1 et 12 suivant le dimensionnement de la conduite.

Dans l'exemple représenté sur les figures 1 et 2, chaque gorge longitudinale 32 s'étend linéairement parallèlement à l'axe de la conduite 10. En variante (non représentée), chaque gorge longitudinale 32 s'étend de manière incurvée par rapport à l'axe de la conduite 10, par exemple en hélice.

Chaque gorge longitudinale 32 présente une étendue angulaire inférieure à l'étendue angulaire des parties latérales 42 du manchon 30 qui délimitent latéralement la gorge 32.

Dans l'exemple représenté sur la figure 2, chaque gorge longitudinale 32 présente une section transversale qui s'évase depuis l'intérieur de la conduite 10 vers l'extérieur de la conduite 10.

La gorge 32 traverse totalement le manchon 30. Elle débouche radialement vers l'intérieur en regard du tronçon de tube 18 qui délimite son fond. Elle débouche radialement vers l'extérieur en regard de la couche externe 26.

De plus, la gorge 32 débouche axialement à ses extrémités longitudinales au droit d'une partie d'extrémité 40 du tronçon de tube 18.

Chaque gorge 32 est obturée radialement vers l'extérieur par un bouchon 34 fixé dans la gorge 32.

Dans l'exemple représenté sur les figures 1 et 2, le bouchon 34 est formé par une pièce longitudinale autoportante en matériau isolant thermiquement. Le bouchon 34 est alors rapporté dans la gorge 32 et fixé dans celle-ci par l'intermédiaire de moyens de fixation 44.

En variante, le bouchon 34 est formé par injection d'un matériau fluide ayant durci dans la gorge 32.

Le bouchon 34 présente des dimensions complémentaires à celle de la gorge 32. Il affleure extérieurement les parties latérales 42 du manchon 30.

Les moyens de fixation 44 comprennent ici au moins une saillie d'encliquetage 46, solidaire de l'un du bouchon 34 et d'une partie latérale 42, la saillie 46 étant reçue dans un logement complémentaire 48 ménagé dans l'autre du bouchon 34 et de la partie latérale 42.

Le raccord 36 (visible en pointillés sur la figure 1) couvre les parties d'extrémité 40 assemblées de chaque paire de tronçons de tube 18 adjacents au niveau de la jonction 23.

Il raccorde longitudinalement les manchons d'isolation respectifs 30 des tronçons de tube adjacents 18, pour assurer la continuité de la couche interne 24. Ainsi, aucun point froid n'est présent sur la longueur de la conduite 10.

La surface extérieure du raccord 36 affleure sensiblement la surface extérieure des manchons 30 qu'il raccorde.

Le raccord 36 est constitué de matériau isolant thermiquement. Il est par exemple formé par injection d'un matériau fluide en regard des parties d'extrémité 40, puis par durcissement de ce matériau.

La couche externe 26 comprend par exemple un enroulement d'un ruban de protection 50 autour de la couche interne 24.

L'épaisseur de la couche externe 26 est inférieure, notamment inférieure à au moins 2 fois l'épaisseur de la couche interne 24.

Aucun tube métallique n'est présent dans l'enveloppe d'isolation thermique 16, ce qui allège considérablement le poids de la conduite 10.

La couche externe 26 définit une surface extérieure de la conduite 10 au contact de l'étendue d'eau.

Chaque gorge 32 reçoit avantageusement au moins une ligne fonctionnelle 17.

La ligne fonctionnelle 17 est par exemple une ligne électrique propre à réaliser un traçage électrique chauffant sur le tube central 14, à l'extérieur du tube central 14. Elle est placée en contact thermique avec la surface extérieure du tube central 14, soit en étant directement posée contre la surface métallique d'un tronçon de tube 18, soit en étant posée sur la couche de protection 22 lorsque cette couche 22 est présente.

La ligne fonctionnelle 17 est par exemple réalisée par un cordon de câbles ou de fils conducteurs reçus dans une gaine métallique.

Elle présente, dans l'exemple représenté sur les figures 1 et 2, une section transversale allongée avec une largeur supérieure à son épaisseur.

La ligne fonctionnelle 17 est disposée dans une gorge 32. Elle est placée au fond de la gorge 32, entre la surface extérieure d'un tronçon de tube 18 et le bouchon 34 obturant la gorge 32.

La ligne fonctionnelle 17 s'étend continûment le long de la conduite 10, dans les gorges 32 d'au moins deux tronçons de tube 18 adjacents, avantageusement dans les gorges 32 d'au moins 50% des tronçons de tube 18 de la conduite 10.

La ligne 17 s'étend également continûment en regard de chaque jonction 23 entre deux tronçons de tube 18 adjacents sur les parties d'extrémité 40 des tronçons 18, et sous le raccord 36.

La ligne 17 présente ainsi une longueur supérieure à celle d'un tronçon 18, avantageusement supérieure à celle d'au moins deux tronçons 18. Il n'est donc pas nécessaire de prévoir des connecteurs électriques sur la ligne 17 entre chaque paire de tronçons 18 adjacents au niveau de la jonction 23.

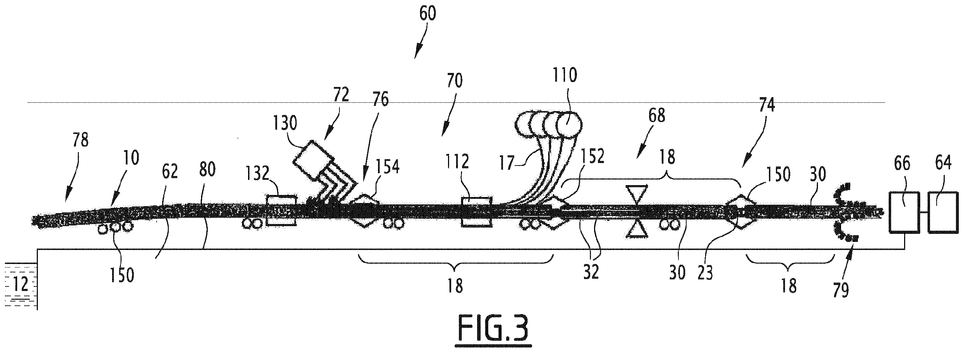

Dans un premier mode de réalisation, la conduite 10 est assemblée dans une première installation 60 selon l'invention, illustrée par les figures 3 à 10.

La première installation 60 selon l'invention est destinée à effectuer une pose en S de la conduite 10.

L'installation 60 comporte une structure de support 62, un poste 64 de stockage et de fourniture de tronçons de tube 18, et un poste 66 d'assemblage bout-à-bout des tronçons de tube 18.

Dans cet exemple, les tronçons de tube 18 présents dans le poste de stockage 64 sont munis d'un manchon 30 dépourvu de gorges 32. L'installation 60 comporte alors un poste 68 de réalisation des gorges 32.

Elle comprend également un poste 70 d'introduction et de guidage de chaque ligne fonctionnelle 17 dans une gorge 32 et un poste 72 de bouchage des gorges 32.

L'installation 60 comporte avantageusement un poste 74 de revêtement de la jonction 23 entre chaque paire de tronçons de tube 18 adjacents, et un poste 76 de fabrication du raccord 36 sur la jonction 23.

L'installation 60 comporte, en aval, un poste 78 de descente dans l'étendue d'eau 12.

L'installation 60 comporte de plus un ensemble 79 de déplacement de l'assemblage de tronçons de tube 18 entre les postes 64 à 78, comprenant par exemple des tensionneurs à chenilles.

Dans cet exemple, la structure de support 62 est flottante sur l'étendue d'eau 12. Elle est par exemple formée par une barge présentant un pont 80 portant les postes 64 à 78.

Le poste de stockage et de fourniture 64 comporte une surface de stockage de tronçons de tube 18 individuels, et des moyens de convoyage de chaque tronçon de tube 18 vers le poste d'assemblage 66.

Le poste d'assemblage 66 comporte des moyens d'alignement successif des différents tronçons de tube 18 dans un plan sensiblement horizontal et des moyens de fixation, avantageusement par soudure, des extrémités en regard de chaque paire de tronçons de tube 18 adjacents.

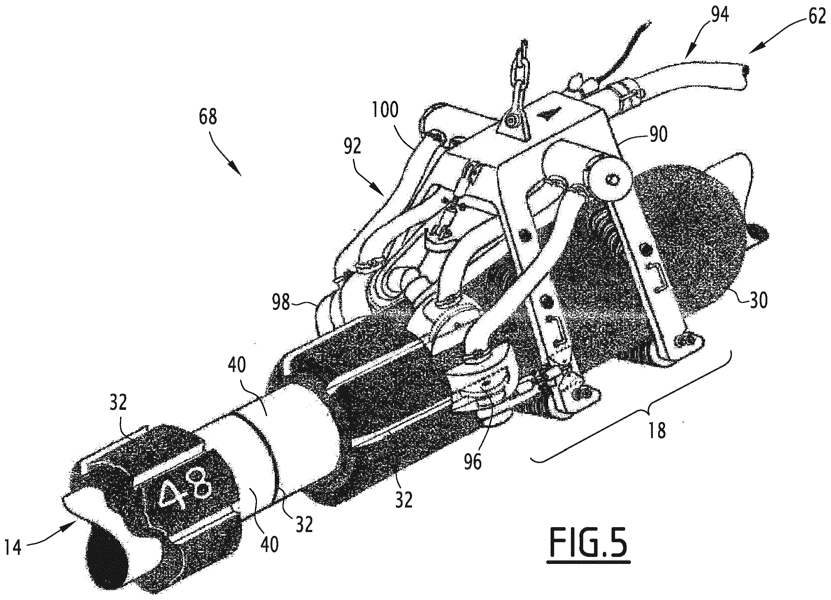

Comme illustré par la figure 5, le poste 68 de réalisation des gorges 32 comporte un étrier 90 de support et de guidage du manchon 30 du tronçon de tube 18, et pour chaque gorge 32 à réaliser, un organe 92 de découpe longitudinale du manchon 30 et un ensemble d'aspiration 94 de la matière découpée par l'organe 92.

Chaque organe de découpe longitudinale 92 comporte ici une lame rotative 96 et un mécanisme d'entraînement en rotation (non représenté) de la lame 96.

L'organe de découpe longitudinale 92 est propre à pénétrer dans l'épaisseur du manchon 30 pour ménager la gorge 32.

L'ensemble d'aspiration 94 comporte un godet 98 de collecte des résidus solides enlevés par la lame 96, disposé autour l'organe de découpe longitudinale 92 et une conduite 100 d'évacuation des résidus solides, raccordée à une source d'aspiration (non représenté).

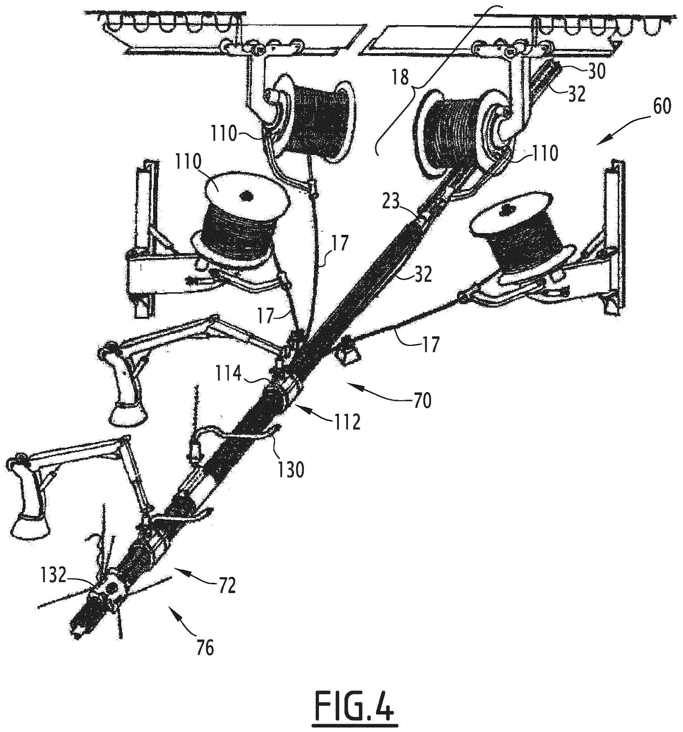

En référence aux figures 4, 6 et 8, le poste d'introduction 70 comporte, pour chaque ligne 17, une bobine 110 de stockage et de déroulement de la ligne 17. Le poste 70 comporte en outre un ensemble 112 de guidage de chaque ligne 17 déroulée à partir d'une bobine 110 dans la gorge 32.

La longueur de la ligne 17 présente sur la bobine 110 est par exemple supérieure à 100 m, notamment comprise entre 200 m et 20 km.

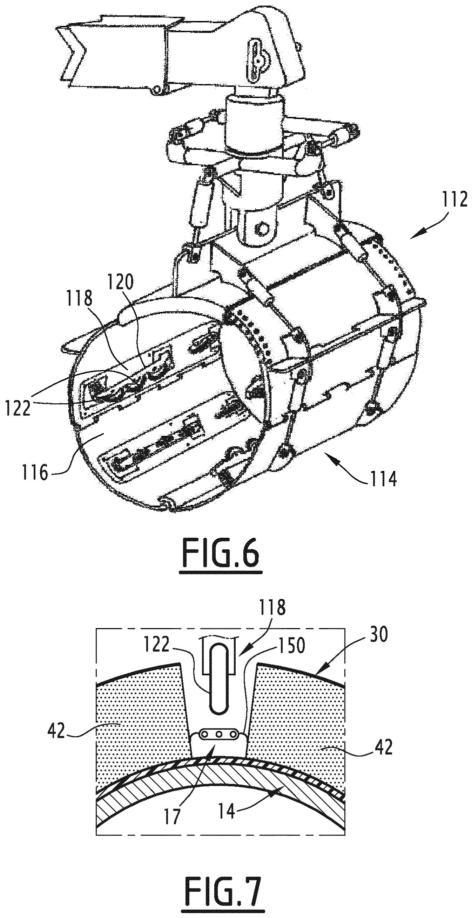

Dans l'exemple de la figure 6, l'ensemble de guidage 112 comporte une chemise 114 délimitant une lumière interne 116 de circulation des tronçons 18 de tube assemblés et, pour chaque gorge 32, un organe de poussée 118 de la ligne 17 dans la gorge 32.

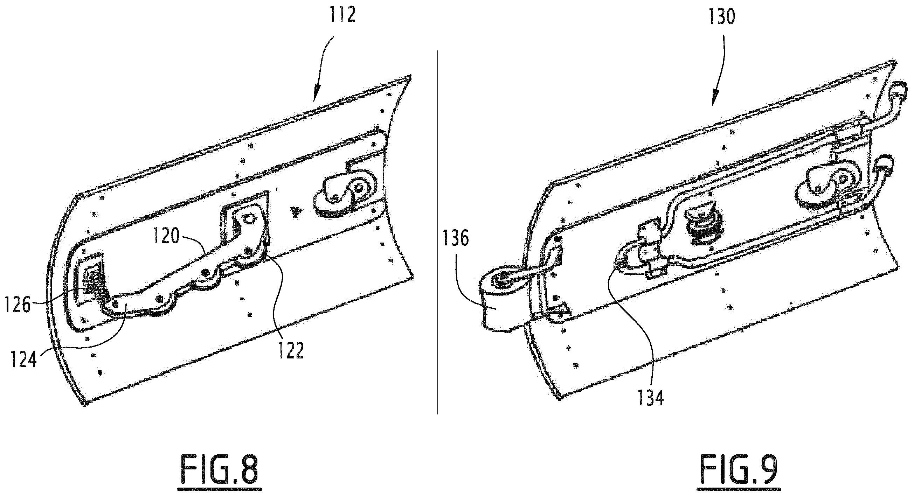

L'organe de poussée 118 fait saillie radialement dans la lumière 116 à partir de la chemise 114. Dans l'exemple représenté sur les figures 6 et 8, l'organe de poussée 118 comporte un doigt 120 articulé sur la chemise 114 par une première extrémité.

Le doigt 120 porte au moins un rouleau 122 destiné à entrer en contact avec la ligne 17. Il présente une extrémité libre 124 sollicitée radialement vers l'axe de la lumière 116 par un organe de sollicitation élastique 126.

En référence aux figures 3 et 9, le poste de bouchage 72 comporte un ensemble 130 d'injection de matériau fluide dans chaque gorge 32, et un ensemble 132 de durcissement du matériau solide pour former un bouchon 34.

Dans l'exemple représenté sur la figure 9, l'ensemble d'injection 130 comporte, pour chaque gorge 32, une buse 134 d'injection du matériau fluide dans la gorge 32 et un organe 136 de répartition du matériau fluide dans la gorge 32. L'organe 136 est par exemple formé par un rouleau.

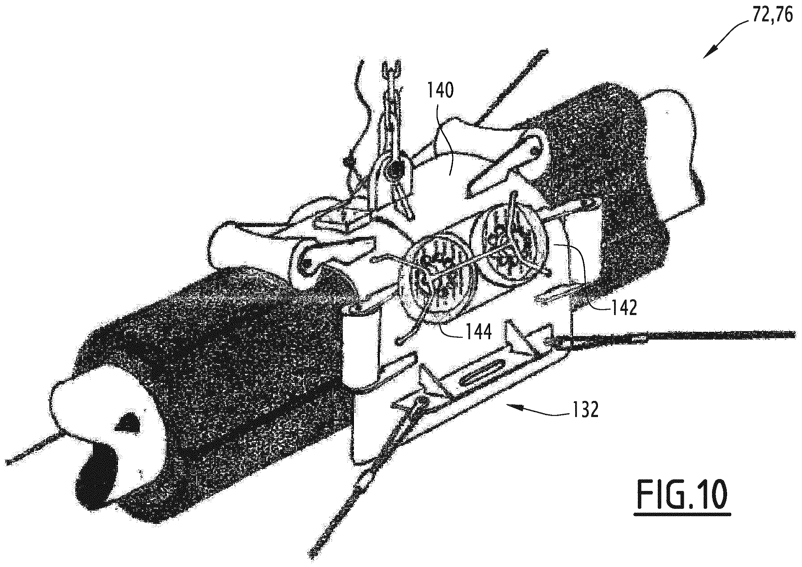

Comme illustré par la figure 10, l'ensemble de durcissement 132 comporte une selle 140 destinée à chevaucher chaque tronçon de tube 18 muni d'un manchon 30, et pour chaque gorge 32, au moins un organe 142 de chauffage, propre à accélérer le durcissement du matériau fluide introduit dans la gorge. Avantageusement, l'ensemble 132 comporte en outre un organe 144 de refroidissement du matériau contenu dans la gorge 32 pour obtenir un bouchon solide 34.

Le poste 74 comporte un ensemble 140 de nettoyage de la jonction entre chaque paire de tronçons 18, par exemple par projection d'un matériau pulvérulent, et un ensemble 142 de dépôt d'un revêtement sur la jonction.

Dans l'exemple représenté sur la figure 3, l'ensemble de nettoyage 140 est disposé en amont du poste 68 de réalisation des gorges 32 et l'ensemble de dépôt 142 est disposé en aval du poste 68, en amont du poste d'introduction 70.

Le poste 76 de fabrication du raccord 36 est ici disposé entre le poste d'introduction 70 de chaque ligne 17 dans une gorge 32 et le poste de bouchage 72 de chaque gorge 32.

En référence à la figure 3, il comporte un ensemble 144 d'amenée d'un matériau fluide destiné à former le raccord 36 sur la jonction 23 et un ensemble de durcissement du matériau fluide formé ici par le même ensemble 132 que celui du poste de bouchage 72.

Le poste de descente 78 comporte une rampe inclinée 150 propre à conduire la conduite 10 hors de la structure flottante 62 suivant un axe faiblement incliné par rapport à l'horizontale (pose en S). Ce poste de descente ajustable est couramment appelé « Stinger » en langue anglaise.

Un premier procédé d'assemblage d'une conduite rigide 10 selon l'invention, mis en oeuvre à l'aide de l'installation 60, va maintenant être décrit.

La conduite 10 est assemblée séquentiellement, en ajoutant à chaque tronçon de tube 18 déjà assemblé, un nouveau tronçon de tube 18.

Initialement, des tronçons de tube 18 disjoints, chacun muni d'un manchon d'isolation 30 dépourvu de gorge introduction 32 sont fournis sur la surface de stockage du poste 64. Puis, un premier tronçon de tube 18 est placé dans le poste d'assemblage 66.

Dans une première étape du procédé, une extrémité d'un deuxième tronçon de tube 18 est placée en regard de l'extrémité libre du premier tronçon de tube 18 assemblé dans le poste 66.

Puis, une jonction 23 est réalisée entre ces deux tronçons de tube 18, par exemple par soudure entre elles des parties d'extrémité 40.

Ensuite, l'assemblage ainsi réalisé est déplacé vers l'aval par ajout d'un nouveau tronçon de tube 18 dans le poste d'assemblage 66. La jonction 32 entre le premier et le deuxième tronçon de tube 18 passe alors en regard de l'ensemble de nettoyage 140 du poste de revêtement 74 pour y être nettoyée, par exemple par projection de matériau pulvérulent.

Lors d'un nouveau déplacement de l'assemblage vers l'aval, le manchon 30 du premier tronçon de tube 18 entre dans le poste 68 de réalisation des gorges 32.

Comme illustré par la figure 5, les organes de découpe longitudinale 92 pénètrent dans le manchon 30 et retirent de la matière du manchon 30 pour ménager chaque gorge 32. La matière ainsi retirée est évacuée par les moyens d'aspiration 94 à travers le flasque 98 et la conduite d'évacuation 100.

La jonction 23 arrive alors au niveau de l'ensemble de revêtement 142 pour recevoir la couche de protection 22.

Lors d'un nouveau déplacement de l'assemblage, le manchon 30 du premier tronçon de tube 18 atteint le poste d'introduction 70.

Lors de ce déplacement, chaque ligne 17 est déroulée à partir d'une bobine 110 et s'introduit dans une gorge 32 lors de son passage dans l'ensemble de guidage 112.

Dans le mode de réalisation des figures 6 à 8, chaque ligne 17 coopère avec un organe de poussée 118, provoquant le placage de la ligne 17 contre le fond de la gorge 32.

Chaque ligne 17 se déroule continûment sur toute la longueur des tronçons successifs 18, et sur chaque jonction 23 entre deux tronçons 18, sans qu'il soit nécessaire d'effectuer un raccordement deux tronçons de lignes au niveau de la jonction 23.

Lors d'un nouveau déplacement de l'assemblage vers l'aval, la jonction 23, à travers laquelle passe chaque ligne 17, atteint le poste 76 de fabrication du raccord 36.

L'ensemble d'amenée 154 remplit l'espace intermédiaire entre deux manchons 30 au niveau de la jonction 23 avec un matériau fluide destiné à durcir pour former le raccord 36 couvrant la jonction 23.

Lors d'un nouveau déplacement de l'assemblage vers l'aval, le manchon 30 passe en regard du poste de bouchage 72.

L'ensemble d'injection 130 remplit alors chaque gorge 32 d'un matériau fluide propre à se solidifier pour former le bouchon 34.

Avantageusement, comme illustré par la figure 9, le matériau fluide est injecté via la buse 134, puis est réparti par l'intermédiaire de l'organe 136.

Ensuite, lors d'un nouveau déplacement de l'assemblage vers l'aval, chaque gorge 32 remplie de matériau fluide, puis la jonction 23 passent dans l'ensemble de durcissement 132.

Dans le mode de réalisation de la figure 10, le matériau fluide est chauffé par l'organe de chauffage 142 pour accélérer son durcissement, puis est refroidi par l'organe de refroidissement 144 en regard de la selle 140. Un bouchon 34 solide est ainsi formé dans chaque gorge 32, pour obturer la gorge 32 vers l'extérieur et maintenir en position la ligne 17 contenue dans la gorge 32.

De même, le matériau fluide couvrant la jonction 23 se solidifie pour former le raccord 36 et assurer la continuité de la couche interne 24.

Ensuite, dans une étape (non représentée), la couche externe 26 est appliquée sur la couche interne 24.

Puis, lors d'un nouveau déplacement de l'assemblage vers l'aval, les tronçons de tube 18 assemblés passent sur la rampe 150 et sont descendus progressivement dans l'étendue d'eau 12 en adoptant une configuration en S.

Le procédé selon l'invention est donc particulièrement simple à mettre en oeuvre. Il permet de déposer une ligne 17 continue sur un tube central 14 formé d'un assemblage de tronçons de tube 18, juste en aval de l'assemblage des tronçons de tube 18, sans avoir à réaliser des raccords sur la ligne 17. L'assemblage est donc réalisé sensiblement à la même vitesse qu'un assemblage classique d'une conduite rigide dépourvue de lignes 17.

De plus, la conduite 10 selon l'invention est dépourvue de tube métallique externe entourant l'enveloppe d'isolation thermique 16. Cette conduite est donc particulièrement légère, tout en conservant des propriétés adéquates de réchauffage du fluide.

Dans une variante, la ligne fonctionnelle 17 est une ligne hydraulique, une ligne optique, ou encore une combinaison d'une ligne électrique et/ou hydraulique et/ou optique.

Dans encore une autre variante, au moins une gorge 32 contient une pluralité de lignes 17, disposées côte à côte ou l'une sur l'autre.

Dans une autre variante, visible sur la figure 8, la ligne 17 est munie d'organes de calage 150 dans la gorge 32, propres à coopérer avec les parois latérales délimitant la gorge 32 pour bloquer en position la ligne 17 dans la gorge 32 avant la mise en place du bouchon 34.

Dans une autre variante, les tronçons de tube 18 disjoints fournis sur la structure 62 dans le poste de stockage 64 comprennent des manchons 30 définissant au moins une gorge d'introduction 32, avant l'assemblage des tronçons de tube 18. Dans ce cas, l'installation 60 est dépourvue de poste 68 de réalisation des gorges 32.

Lors de l'étape d'assemblage, les gorges 32 préexistantes sur les manchons 30 de chaque paire de tronçons de tube 18 adjacents sont placées en regard angulairement les unes des autres lors de l'assemblage de la paire de tronçons de tube 18.

Dans encore une autre variante, les bouchons 64 sont préformés. Ils sont réalisés par des blocs autoportants de matériau isolant thermiquement. Le poste de bouchage 72 comporte alors un ensemble de mise en place des bouchons 64 dans les gorges 32.

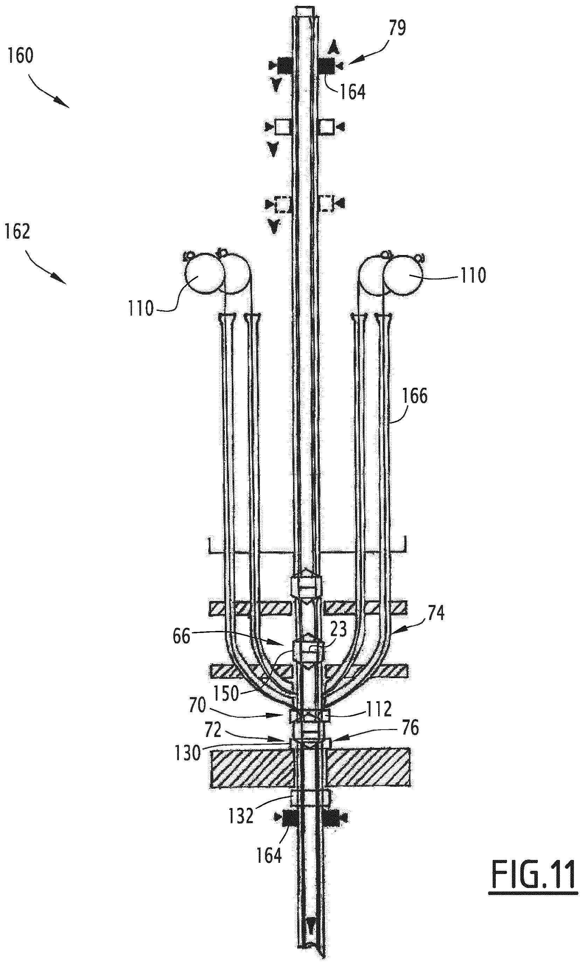

Une deuxième installation 160 de pose selon l'invention est illustrée par les figures 10 et 11. Cette installation 160 est destinée à la pose d'une conduite 10 en J.

À la différence de l'installation 60 représentée sur les figures 1 à 9, l'installation 160 comporte une tour de montage 162 placée au droit d'un puits 164 ménagé dans la structure 62, ou au droit d'un bord de la structure 62. L'ensemble 79 de déplacement de l'assemblage de tronçons de tube 18 comporte dans cet exemple deux paires de pinces 164 pas à pas, propres à saisir un tronçon de tube 18 et à le déplacer en translation le long de l'axe de la tour 162. L'ensemble de déplacement 79 est ici porté par la tour 162.

L'ensemble de déplacement 79 permet de descendre la conduite 10 dans l'étendue d'eau 12 sensiblement à la verticale.

Dans l'exemple représenté sur la figure 11, la tour 162 est dépourvue de poste 68 de réalisation des gorges 32. Les tronçons de tube 18 disjoints présents dans le poste de stockage et de fourniture 64 présentent des manchons 30 d'isolation munis de gorges 32.

Comme illustré par la figure 11, la tour 162 porte le poste d'assemblage 66, le poste d'introduction 70, le poste de bouchage 72 et le poste 76 de fabrication du raccord. La tour 162 porte aussi le poste de revêtement 74, lorsqu'il est présent.

De préférence, les bobines 110 du poste d'introduction sont disposées latéralement sur la tour 162, au-dessus du poste d'assemblage 66 et au-dessus de l'ensemble de guidage 112. Des goulottes d'amenée 166 sont prévues pour guider chaque ligne 17 déroulée à partir d'une bobine 110 vers l'ensemble de guidage 112.

Lors de la mise en oeuvre du procédé d'assemblage, pour chaque nouveau tube 18 à assembler, les moyens de convoyage 166 saisissent le tronçon de tube 18 et l'amènent sur la tour 162, en le plaçant dans l'axe de la tour 162.

Puis, le tronçon de tube 18 est saisi par une pince supérieure 164, avec son extrémité inférieure placée dans le poste d'assemblage 66 pour y être fixée sur l'extrémité libre d'un autre tronçon de tube 18.

Ensuite, la pince 164 descend le tronçon de tube 18 dans une première position intermédiaire permettant le nettoyage de la jonction 23 par l'ensemble de nettoyage 150.

Le tronçon de tube 18 est ensuite descendu pour passer à travers l'ensemble de guidage 112 du poste d'introduction 70, où les gorges 32 reçoivent les lignes 17 déroulées à partir des bobines 110.

Dans une deuxième position intermédiaire de la pince 164, la jonction 32 est située en regard du poste 76 de fabrication du raccord 36 pour recevoir le matériau fluide propre à se solidifier.

Puis, le tronçon de tube 18 descend à nouveau pour faire passer les gorges 32 du manchon 30 dans l'ensemble d'injection 130, et ensuite, dans l'ensemble de durcissement 132, afin de former chaque bouchon 34.

La conduite 10 ainsi réalisée est ensuite immergée verticalement dans l'étendue d'eau 12 afin de réaliser la pose en J.

Dans une variante (non représentée) du premier procédé selon l'invention, le tube central 14 est fabriqué à terre, en le munissant de manchons 30 définissant des gorges d'introduction 32. Le tube central 14 est ensuite enroulé sur un tambour ou dans un panier, avant d'être chargé sur la structure 62.

Lorsque la conduite 10 doit être posée, le tube central 14 est déroulé pour passer successivement dans un poste d'introduction 70, dans un poste de bouchage 72, puis dans un poste de fabrication du raccord 76, comme décrit précédemment pour le premier procédé.

Lorsque le bouchon 34 est formé par une pièce autoportante ou par injection d'un matériau fluide, le matériau formant le bouchon 34 est par exemple un matériau thermodurcissable.

En variante,, le bouchon 34 est formé par une pièce en matériau thermoplastique, notamment en matériau thermoplastique oléfine, en particulier en polyéthylène ou en polypropylène.

Dans un exemple avantageux, le manchon d'isolation thermique 30 est formé en matériau thermoplastique en étant initialement dépourvu de gorges 32.

Les gorges 32 sont ménagées à l'aide d'un outil de découpe par chauffage dans le matériau thermoplastique du manchon 30. La découpe est effectuée de manière propre, pour constituer, à partir de chaque gorge 32 ménagée, une pièce solide autoportante de dimensions complémentaires à la gorge.

Une fois la ligne fonctionnelle continue 17 introduite dans la gorge 32, la pièce autoportante est réintroduite dans la gorge 32 et est recollée par chauffage, formant ainsi un bouchon 34. Ainsi, la perte de matière est nulle, car le bouchon 34 est formé exclusivement du matériau découpé dans le manchon 30, qui est réutilisé.

Pour la mise en oeuvre de cette variante, le matériau découpé du manchon 30 est écarté radialement à l'écart du manchon 30 pour laisser passer la ligne flexible 17 en vue de son introduction dans la gorge 32, puis est rapproché en continu et sans découpe vers le manchon 30 pour reboucher la gorge 32.

Une couronne chauffante est alors passée autour du manchon 30 pour effectuer le collage du bouchon 34. La couronne comporte avantageusement un outil de découpe radiale du bouchon pour découper l'excès de matière radiale du bouchon 34 dû à la présence de la ligne 17 dans la gorge 32.

## Revendications

1. Procédé d'assemblage d'une conduite rigide (10) destinée à être placée dans une étendue d'eau (12), la conduite rigide (10) comprenant un tube interne (14) métallique, et une enveloppe externe (16) non métallique d'isolation thermique destinée à être placée au contact de l'étendue d'eau (12), le procédé comprenant les étapes suivantes :
- assemblage bout-à-bout de tronçons (18) de tube métallique pour former un tube interne (14) présentant un passage continu (20) de circulation de fluide ;
- disposition d'un manchon (30) d'isolation thermique autour de chaque tronçon de tube (18) métallique, le manchon d'isolation thermique (30) comprenant au moins une gorge longitudinale (32) ;
- introduction d'une ligne fonctionnelle continue (17) dans au moins deux gorges longitudinales (32) d'au moins deux tronçons de tube (18) adjacents ;
- bouchage de chaque gorge longitudinale (32) pour couvrir la ligne fonctionnelle (17) continue.

2. Procédé selon la revendication 1, **caractérisé en ce que** le bouchage de chaque gorge longitudinale (32) comprend la mise en place d'une pièce autoportante de matériau isolant thermiquement dans la gorge longitudinale (32).

3. Procédé selon la revendication 1, **caractérisé en ce que** le bouchage de chaque gorge longitudinale (32) comprend le remplissage de chaque gorge longitudinale (32) par un matériau fluide et le durcissement du matériau fluide pour former un bouchon (34) de matériau isolant thermiquement.

4. Procédé selon l'une quelconque des revendications précédentes, **caractérisé en ce que** chaque tronçon de tube (18) métallique comporte une partie d'extrémité (40) faisant saillie longitudinalement au-delà du manchon d'isolation thermique (30), l'étape de formation de l'enveloppe externe (16) continue comprenant, après l'assemblage bout-à-bout de deux tronçons de tube (18) adjacents, la formation d'un raccord (36) d'isolation thermique couvrant les parties d'extrémités (40), le raccord d'isolation (36) raccordant les manchons d'isolation thermique (30) des deux tronçons de tube (18) adjacents.

5. Procédé selon l'une quelconque des revendications précédentes, **caractérisé en ce que** la ou chaque gorge longitudinale (32) est préformée lors de la fabrication du manchon d'isolation thermique (30).

6. Procédé selon l'une quelconque des revendications 1 à 4, **caractérisé en ce qu'**il comporte une étape de ménagement d'au moins une gorge longitudinale (32) dans le manchon d'isolation thermique (30) par retrait de matière, la matière retirée pour ménager la gorge longitudinale (32) étant avantageusement utilisée pour former au moins en partie le bouchon (34).

7. Procédé selon l'une quelconque des revendications précédentes, **caractérisé en ce que** le bouchon (34) est formé à base d'un matériau thermodurcissable, ou à base d'un matériau thermoplastique, tel qu'un matériau thermoplastique oléfine, notamment en polypropylène ou en polyéthylène.

8. Procédé selon l'une quelconque des revendications précédentes, **caractérisé en ce que** l'étape d'introduction comporte le placage de la ligne fonctionnelle continue (17) contre un fond de la gorge longitudinale (32) par l'intermédiaire d'un ensemble de guidage (112).

9. Procédé selon l'une quelconque des revendications précédentes, **caractérise en ce que** l'étape d'introduction comporte le déroulement d'une bobine (110) portant la ligne continue (17), pour amener la ligne continue (17) dans une gorge longitudinale (32).

10. Procédé selon l'une quelconque des revendications précédentes, **caractérisé en ce qu'**il comporte une étape de pose en S ou en J des tronçons de tube métallique (18) assemblés dans l'étendue d'eau (12), après l'étape de formation de l'enveloppe externe (16).

11. Installation (60 ; 160) d'assemblage d'une conduite rigide (10) destinée à être placée dans une étendue d'eau (12), la conduite rigide (10) comprenant un tube interne (14) métallique, et une enveloppe externe (16) non métallique d'isolation thermique destinée à être placée au contact de l'étendue d'eau (12), l'installation (60 ; 160) comprenant :
- un poste (66) d'assemblage bout-à-bout de tronçons de tube (18) métallique pour former un tube interne (14) présentant un passage continu (20) de circulation de fluide ;
- un ensemble (64 ; 64, 68) de fourniture d'une pluralité de tronçons de tube (18) munis d'un manchon d'isolation thermique (30), le manchon d'isolation thermique (30) comprenant au moins une gorge longitudinale (32) s'étendant sensiblement jusqu'au tube métallique ;
- un poste (70) d'introduction d'une ligne fonctionnelle continue (17) dans au moins deux gorges longitudinales (32) d'au moins deux tronçons de tube adjacents ;
- un poste (72) de bouchage de chaque gorge longitudinale (32) pour couvrir la ligne fonctionnelle continue (17).

12. Installation (60 ; 160) selon la revendication 11, **caractérisé en ce qu'**il comporte une structure flottante (62) portant le poste d'assemblage (66), l'ensemble de fourniture (64 ; 64, 68), le poste d'introduction (70), et le poste de bouchage (72).

13. Conduite rigide (10) destinée à être placée dans une étendue d'eau (12), comprenant :
- un tube interne (14) métallique, et
- une enveloppe externe (16) non métallique d'isolation thermique destinée à être placée au contact de l'étendue d'eau (12), le tube interne (14) comprenant un assemblage bout-à-bout de tronçons de tube métallique (18), le tube interne (14) délimitant un passage continu (20) de circulation de fluide ;
l'enveloppe externe (16) s'étendant de manière continue autour des tronçons de tube métallique (18) assemblés;
l'enveloppe externe (16) comportant un manchon d'isolation thermique (30) disposé autour de chaque tronçon de tube (18) métallique, le manchon d'isolation thermique (30) comprenant au moins une gorge longitudinale (32) s'étendant sensiblement jusqu'au tube interne (14) ;
la conduite (10) comportant une ligne fonctionnelle continue (17) introduite au moins dans deux gorges longitudinales (32) d'au moins deux tronçons de tube (18) adjacents ;
l'enveloppe externe (16) comprenant un bouchon (34) obturant chaque gorge longitudinale (32) pour couvrir la ligne fonctionnelle continue (17).

14. Conduite (10) selon la revendication 13, **caractérisé en ce que** le bouchon (34) est formé à partir d'un matériau fluide ayant durci dans la gorge longitudinale (32) ou est formé à partir d'une pièce autoportante rapportée dans la gorge longitudinale (32).

15. Conduite (10) selon l'une quelconque des revendications 13 à 14, **caractérisé en ce que** la ligne fonctionnelle continue (17) est choisie parmi un câble électrique de chauffage, une ligne hydraulique de chauffage, un câble électrique, et/ou optique et/ou hydraulique.

## Patentansprüche

1. Verfahren zum Montieren einer steifen Rohrleitung (10), die vorgesehen ist, um in einer Gewässer (12) angeordnet zu sein, wobei die steife Rohrleitung (10) ein metallisches Innenrohr (14) und eine nichtmetallische Wärmedämmungs-Außenhülle (16) aufweist, die vorgesehen ist, um in Kontakt mit dem Gewässer (12) angeordnet zu sein, wobei das Verfahren die folgenden Schritte aufweist:
- Ende-an-Ende-Montieren von Metallrohrabschnitten (18), um ein Innenrohr (14) auszubilden, welches einen kontinuierlichen Durchgang (20) zum Zirkulieren von Fluid aufweist,
- Anordnen einer Wärmedämmungsmuffe (30) um jeden Metallrohrabschnitt (18), wobei die Wärmedämmungsmuffe (30) mindestens eine Längsauskehlung (32) aufweist,
- Einführen einer kontinuierlichen Funktionsleitung (17) in mindestens zwei Längsauskehlungen (32) von mindestens zwei benachbarten Rohrabschnitten (18),
- Verschließen jeder Längsauskehlung (32), um die kontinuierliche Funktionsleitung (17) zu bedecken.

2. Verfahren gemäß Anspruch 1, **dadurch gekennzeichnet, dass** das Verschließen jeder Längsauskehlung (32) das Einbringen eines selbsttragenden Teils aus wärmedämmenden Material in die Längsauskehlung (32) aufweist.

3. Verfahren gemäß Anspruch 1, **dadurch gekennzeichnet, dass** das Verschließen jeder Längsauskehlung (32) das Füllen jeder Längsauskehlung (32) mit einem Fluidmaterial und das Aushärten des Fluidmaterials zum Ausbilden eines Verschlusses (34) aus wärmedämmenden Material aufweist.

4. Verfahren gemäß irgendeinem der vorhergehenden Ansprüche, **dadurch gekennzeichnet, dass** jeder Metallrohrabschnitt (18) einen Endabschnitt (40) aufweist, der in Längsrichtung über die Wärmedämmungsmuffe (30) hinaus hervorragt, wobei der Schritt des Ausbildens der kontinuierlichen Außenhülle (16) nach dem Ende-zu-Ende-Montieren von zwei benachbarten Rohrabschnitten (18) das Ausbilden eines Wärmedämmungsanschlusses (36) aufweist, der die Endabschnitte (40) bedeckt, wobei der Dämmungsanschluss (36) die Wärmedämmungsmuffen (30) der beiden benachbarten Rohrabschnitte (18) miteinander verbindet.

5. Verfahren gemäß irgendeinem der vorhergehenden Ansprüche, **dadurch gekennzeichnet, dass** die oder jede Längsauskehlung (32) beim Herstellen der Wärmeisolationsmuffe (30) vorgeformt wird.

6. Verfahren gemäß irgendeinem der Ansprüche 1 bis 4, **dadurch gekennzeichnet, dass** es einen Schritt des Ausbildens mindestens einer Längsauskehlung (32) in der Wärmedämmungsmuffe (30) durch Entfernen von Material aufweist, wobei das zum Ausbilden der Längsauskehlung (32) entfernte Material vorteilhafterweise verwendet wird, um den Verschluss (34) zumindest teilweise auszubilden.

7. Verfahren gemäß irgendeinem der vorhergehenden Ansprüche, **dadurch gekennzeichnet, dass** der Verschluss (34) auf Basis eines duroplastischen Materials oder auf Basis eines thermoplastischen Materials, zum Beispiel eines thermoplastischen Olefinmaterials, insbesondere aus Polypropylen oder aus Polyethylen, gebildet wird.

8. Verfahren gemäß irgendeinem der vorhergehenden Ansprüche, **dadurch gekennzeichnet, dass** der Schritt des Einführens das Aufbringen der kontinuierlichen Funktionsleitung (17) gegen einen Boden der Längsauskehlung (32) mittels einer Führungsanordnung (112) aufweist.

9. Verfahren gemäß irgendeinem der vorhergehenden Ansprüche, **dadurch gekennzeichnet, dass** der Schritt des Einführens das Abrollen einer Spule (110) aufweist, die die kontinuierliche Leitung (17) trägt, um die kontinuierliche Leitung (17) in eine Längsauskehlung (32) einzubringen.

10. Verfahren gemäß irgendeinem der vorhergehenden Ansprüche, **dadurch gekennzeichnet, dass** es nach dem Schritt des Ausbildens der Außenhülle (16) einen Schritt des Positionierens der montierten Metallrohrabschnitte (18) in dem Gewässer (12) in S- oder in J-Form aufweist.

11. Anlage (60, 160) zum Montieren einer steifen Rohrleitung (10), die vorgesehen ist, um in einem Gewässer (12) angeordnet zu werden, wobei die steife Rohrleitung (10) ein metallisches Innenrohr (14) und eine nichtmetallische Wärmedämmungs-Außenhülle (16) aufweist, die vorgesehen ist, um in Kontakt mit dem Gewässer (12) angeordnet zu werden, wobei die Anlage (60, 160) aufweist:
- eine Station (66) zum Ende-an-Ende-Montieren von Metallrohrabschnitten (18), um ein Innenrohr (14) auszubilden, welches einen kontinuierlichen Durchgang (20) zum Zirkulieren von Fluid aufweist,
- eine Einrichtung (64; 64, 68) zum Bereitstellen einer Mehrzahl von Rohrabschnitten (18), die mit einer Wärmedämmungsmuffe (30) versehen sind, wobei die Wärmedämmungsmuffe (30) mindestens eine Längsauskehlung (32) aufweist, die sich im Wesentlichen bis zum Metallrohr erstreckt,
- eine Station (70) zum Einführen einer kontinuierlichen Funktionsleitung (17) in mindestens zwei Längsauskehlungen (32) von mindestens zwei benachbarten Rohrabschnitten,
- eine Station (72) zum Verschließen jeder Längsauskehlung (32), um die kontinuierliche Funktionsleitung (17) zu bedecken.

12. Anlage (60, 160) gemäß Anspruch 11, **dadurch gekennzeichnet, dass** sie eine schwimmende Struktur (62) aufweist, die die Montagestation (66), die Bereitstellungseinrichtung (64; 64, 68), die Einführstation (70) und die Station zum Verschließen (72) trägt.

13. Steife Rohrleitung (10), die vorgesehen ist, um in einem Gewässer (12) angeordnet zu werden, aufweisend:
- ein metallisches Innenrohr (14) und
- eine nicht metallische Wärmedämmungs-Außenhülle (16), die vorgesehen ist, um in Kontakt mit dem Gewässer (12) angeordnet zu werden, wobei das Innenrohr (14) eine Ende-an-Ende-Anordnung von Metallrohrabschnitten (18) aufweist, wobei das Innenrohr (14) einen kontinuierlichen Durchgang (20) zum Zirkulieren von Fluid begrenzt,
wobei sich die Außenhülle (16) kontinuierlich um die montierten Metallrohrabschnitte (18) herum erstreckt,
wobei die Außenhülle (16 eine Wärmedämmungsmuffe (30) aufweist, die um jeden Metallrohrabschnitt (18) herum angeordnet ist, wobei die Wärmedämmungsmuffe (30) mindestens eine Längsauskehlung (32) aufweist, die sich im Wesentlichen bis zum Innenrohr (14) erstreckt,
wobei die Rohrleitung (10) eine Funktionsleitung (17) aufweist, die mindestens in zwei Längsauskehlungen (32) von mindestens zwei benachbarten Rohrabschnitten (18) eingeführt ist,
wobei die Außenhülle (16) einen Verschluss (34) aufweist, der jede Längsauskehlung (32) verschließt, um die kontinuierliche Funktionsleitung (17) zu bedecken.

14. Rohrleitung (10) gemäß Anspruch 13, **dadurch gekennzeichnet, dass** der Verschluss (34) aus einem Fluidmaterial gebildet ist, welches in der Längsauskehlung (32) ausgehärtet ist, oder aus einem selbsttragenden Teil gebildet ist, das in die Längsauskehlung (32) eingebracht wird.

15. Rohrleitung (10) gemäß irgendeinem der Ansprüche 13 bis 14, **dadurch gekennzeichnet, dass** die kontinuierliche Funktionsleitung (17) aus einem elektrischen Heizkabel, einer hydraulischen Wärmeleitung, einer elektrischen und/oder optischen und/oder hydraulischen Leitung ausgewählt ist.

## Claims

1. A method for assembling a rigid pipe (10) intended to be placed in a stretch of water (12), the rigid pipe (10) comprising a metal inner tube (14), and a non-metal thermally insulating outer casing (16) intended to be placed in contact with the stretch of water (12), the method comprising the following steps:
- assembling metal tube sections (18) end-to-end in order to form an inner tube (14) having a continuous passage (20) for circulation of fluid;
- positioning a thermally insulating sleeve (30) around each metal tube section (18), the thermally insulating sleeve (30) comprising at least one longitudinal groove (32);
- introducing a continuous functional line (17) into at least two longitudinal grooves (32) of at least two adjacent tube sections (18);
- filling in each longitudinal groove (32) in order to cover the continuous functional line (17).

2. The method according to claim 1, **characterized in that** the filling in of each longitudinal groove (32) comprises the setting into place of a self-supporting part of a thermally insulating material in the longitudinal groove (32).

3. The method according to claim 1, **characterized in that** the filling in of each longitudinal groove (32) comprises the filling of each longitudinal groove (32) with a fluid material and the hardening of the fluid material in order to form a plug (34) of thermally insulating material.

4. The method according to any of the preceding claims, **characterized in that** each metal tube section (18) includes an end portion (40) longitudinally protruding beyond the thermally insulating sleeve (30), the step for forming the continuous outer casing (16) comprising, after end-to-end assembling of two adjacent tube sections (18), the formation of a thermally insulating connection (36) covering the end portions (40), the insulation connection (36) connecting the thermally insulating sleeves (30) of both adjacent tube sections (18).

5. The method according to any of the preceding claims, **characterized in that** said or each longitudinal groove (32) is pre-formed during the manufacturing of the thermally insulating sleeve (30).

6. The method according to any of claims 1 to 4, **characterized in that** it includes a step for making at least one longitudinal groove (32) in the thermally insulating sleeve (30) by removal of material, the material removed for making the longitudinal groove (32) being advantageously used for forming at least partly the plug (34).

7. The method according to any of the preceding claims, **characterized in that** the plug (34) is formed on the basis of a thermosetting material, or on the basis of a thermoplastic material, such as an olefinic thermoplastic material, notably in polypropylene or polyethylene.

8. The method according to any of the preceding claims, **characterized in that** the introduction step includes the flattening of the continuous functional line (17) against a bottom of the longitudinal groove (32) via a guiding assembly (112).

9. The method according to any of the preceding claims, **characterized in that** the introduction step includes the unwinding of a spool (110) bearing the continuous line (17), in order to bring the continuous line (17) into a longitudinal groove (32).

10. The method according to any of the preceding claims, **characterized in that** it includes a step for laying as an S- or J-assembled metal tube sections (18) in the stretch of water (12), after the step for forming the outer casing (16).

11. An installation (60; 160) for assembling a rigid pipe (10) intended to be placed in a stretch of water (12), the rigid pipe (10) comprising a metal inner tube (14), and a non-metal thermally insulating outer casing (16) intended to be placed in contact with a stretch of water (12), the installation (60; 160) comprising:
- a station (66) for assembling metal tube sections (18) end-to-end in order to form an inner tube (14) having a continuous passage (20) for circulation of fluid;
- an assembly (64; 64, 68) for providing a plurality of tube sections (18) provided with a thermally insulating sleeve (30), the thermally insulating sleeve (30) comprising at least one longitudinal groove (32) substantially extending as far as the metal tube;
- a station (70) for introducing a continuous functional line (17) into at least two longitudinal grooves (32) of at least two adjacent tube sections;
- a station (72) for filling in each longitudinal groove (32) in order to cover the continuous functional line (17).

12. The installation (60; 160) according to claim 11, **characterized in that** it includes a floating structure (62) bearing the assembling station (66), the supply assembly (64; 64, 68), the introduction station (70), and the filling-in station (72).

13. A rigid pipe (10) intended to be placed in a stretch of water (12), comprising:
- a metal inner tube (14), and
- a non-metal thermally insulating outer casing (16) intended to be placed in contact with the stretch of water (12), the inner tube (14) comprising an end-to-end assembly of metal tube sections (18), the inner tube (14) delimiting a continuous passage (20) for circulation of fluid;
the outer casing (16) continuously extending around the assembled metal tube sections (18);
the outer casing (16) including a thermally insulating sleeve (30) positioned around each metal tube section (18), the thermally insulating sleeve (30) comprising at least one longitudinal groove (32) substantially extending as far as the inner tube (14);
the pipe (10) including a continuous functional line (17) introduced at least into two longitudinal grooves (32) of at least two adjacent tube sections (18);
the outer casing (16) comprising a plug (34) obturating each longitudinal groove (32) in order to cover the continuous functional line (17).

14. The pipe (10) according to claim 13, **characterized in that** the plug (34) is formed from a fluid material having hardened in the longitudinal groove (32) or is formed from a self-supporting part added into the longitudinal groove (32).

15. The pipe (10) according to any of claims 13 to 14, **characterized in that** the continuous functional line (17) is selected from an electric heating cable, a hydraulic heating line, an electric and/or optical and/or hydraulic cable.
